# FASCICULE DE BREVET EUROPEEN

(11) **EP 3 359 409 B1**
(45) Date de publication et mention de la délivrance du brevet: **04.11.2020**
(21) Numéro de dépôt: 16775280.7
(22) Date de dépôt: 08.09.2016
(51) Int. Cl.: B60K 20/04

(54) **DISPOSITIF D'OBTURATION D'UNE OUVERTURE DE PLANCHER DE VÉHICULE, À NERVURES DE GUIDAGE**
VORRICHTUNG ZUM ABDICHTEN EINER FAHRZEUGBODENÖFFNUNG MIT FÜHRUNGSRIPPEN
DEVICE FOR SEALING A VEHICLE FLOOR OPENING, HAVING GUIDE RIBS

(30) Priorité: 07.10.2015 FR 1559540
(43) Date de publication de la demande: 15.08.2018
(73) Titulaire: PSA AUTOMOBILES S.A., 78300 Poissy (FR)
(72) Inventeur: ROTEREAU, Alexandre, 25550 Bavans (FR); CONVERS, Germain, 25200 Bethoncourt (FR)
(86) Numéro de dépôt international: PCT/FR2016/052235
(87) Numéro de publication internationale: WO 2017/060577

(56) Documents cités:
- EP-A1- 0 704 336
- EP-A1- 2 101 089
- WO-A2-2009/116064

## Description

L'invention concerne les véhicules, et plus précisément les ouvertures que comprennent certaines parois structurelles définissant une partie au moins d'un plancher au sein de véhicules.

Certains véhicules, généralement de type automobile, comprennent une boîte de vitesses qui est contrôlée par un levier de vitesse solidarisé à une paroi structurelle définissant une partie au moins d'un plancher.

Lorsque le levier de vitesse contrôle une boîte de vitesses mécanique (éventuellement pilotée), il comprend une extrémité inférieure logée dans un boîtier de commande mécanique installé fixement sous la paroi structurelle précitée. Le passage et les débattements du levier de vitesse au travers de cette paroi structurelle se font dans une ouverture dont les dimensions sont relativement importantes (typiquement 150 mm x 100 mm).

Lorsque le levier de vitesse contrôle une boîte de vitesses automatique, il comprend également une extrémité inférieure qui est logée dans un boîtier de commande électrique solidarisé fixement à la paroi structurelle précitée, mais dont les dimensions sont notablement plus petites que celles d'un boîtier de commande mécanique.

Lorsque l'on utilise la même paroi structurelle pour des véhicules à boîte de vitesses automatique et des véhicules à boîte de vitesses mécanique, l'ouverture de cette paroi structurelle n'est pas obturée et donc permet une remontée de bruits gênants dans l'habitacle. Pour limiter cette remontée de bruits, on solidarise fixement à la paroi structurelle, sous sa face inférieure ou sur sa face supérieure, par soudage ou vissage, une pièce d'obturation de forme générale rectangulaire.

Lorsque la pièce d'obturation doit être solidarisée à la face supérieure de la paroi structurelle, la solidarisation est peu contraignante en termes d'ergonomie pour le technicien qui la réalise. Mais cela induit un risque d'infiltration d'eau par la face supérieure. Lorsque la pièce d'obturation doit être solidarisée à la face inférieure de la paroi structurelle, il n'y a plus de risque d'infiltration d'eau mais la solidarisation est contraignante en termes d'ergonomie pour le technicien qui la réalise du fait qu'elle impose qu'il soit placé sous la paroi structurelle avec les bras en l'air.

Plusieurs solutions ont été proposées pour réduire cette dernière contrainte. Une première solution consiste à prévoir des pions de pré-maintien sur la face supérieure de la pièce d'obturation. Mais cela augmente le coût et la complexité du moule de cette dernière. En outre, cela impose encore une intervention du technicien sous la partie structurelle pour coupler la pièce d'obturation à la partie structurelle. Une seconde solution consiste à prévoir une poignée de maintien sur la face supérieure de la pièce d'obturation, mais cela augmente le coût et le poids de cette dernière et induit une perte de volume dans la zone qui est située au-dessus de l'ouverture et dans laquelle est généralement installée une console centrale ou un vide poche.

Le brevet EP-B-0 704 336 divulgue un support de levier de commande de boîte de vitesses comprenant une semelle d'appui dotée de vis, et fixé sur un plancher d'un véhicule automobile. Mais la mise en place de ce type de support nécessite un technicien placé sous le plancher avec les bras en l'air pour recentrer le support qui peut se bloquer sur le plancher lors de son introduction.

L'invention a donc notamment pour but d'améliorer la situation.

Elle propose notamment un dispositif d'obturation selon la revendication 1.

Grâce à l'angle d'inclinaison de 10° à 30° défini par la variation de la largeur des nervures, la pièce peut être centrée puis guidée sans blocage dans l'ouverture lors de son introduction dans une phase de couplage, y compris lorsque cette dernière est automatisée au moyen d'une « luge », par exemple.

Le dispositif selon l'invention peut comporter d'autres caractéristiques qui peuvent être prises séparément ou en combinaison, et notamment :
- les nervures peuvent relier entre elles les paroi externe et paroi interne ;
- les nervures peuvent être définies sur quatre côtés de la face externe de la paroi interne ;
- la paroi d'appui peut être munie d'au moins deux vis propres à traverser des trous correspondants définis dans la paroi structurelle à la périphérie de l'ouverture, et à coopérer avec des écrous vissés après l'introduction de la pièce du côté de la face supérieure de la paroi structurelle ;
- la paroi d'appui peut comprendre deux parois auxiliaires définissant deux pieds de formes différentes.

L'invention propose également un véhicule, éventuellement de type automobile, et comprenant, d'une part, une paroi structurelle définissant une partie au moins d'un plancher et comportant une ouverture, et, d'autre part, un dispositif d'obturation du type de celui présenté ci-avant et obturant cette ouverture.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes et les niveaux de gris), sur lesquels :
- la figure 1 illustre schématiquement, dans une vue en perspective, un exemple de luge, supportant un exemple d'écran thermique sur lequel est placé un exemple de réalisation d'un dispositif d'obturation selon l'invention, et destiné à permettre le couplage de cet écran thermique et de ce dispositif d'obturation à une paroi structurelle de plancher d'un véhicule,
- les figures 2 et 3 illustrent schématiquement, dans des vues en perspective différentes, le dispositif d'obturation de la figure 1, avant qu'il n'équipe un véhicule,
- la figure 4 illustre schématiquement, dans une première vue en coupe, le dispositif d'obturation des figures 2 et 3 pendant sa phase de couplage à une paroi structurelle de plancher d'un véhicule, et
- la figure 5 illustre schématiquement, dans une seconde vue en coupe perpendiculaire à la première vue, le dispositif d'obturation des figures 2 et 3 pendant sa phase de couplage à une paroi structurelle de plancher d'un véhicule.

L'invention a notamment pour but de proposer un dispositif d'obturation DO destiné à équiper une ouverture OC définie dans une paroi structurelle PS qui définit une partie au moins d'un plancher d'un véhicule.

Cette paroi structurelle PS peut être utilisée dans des véhicules à boîte de vitesses automatique et des véhicules à boîte de vitesses mécanique. Lorsque cette paroi structurelle PS fait partie d'un véhicule à boîte de vitesses mécanique, son ouverture OC sert au passage et aux débattements d'un levier de vitesse. Lorsque cette paroi structurelle PS doit faire partie d'un véhicule à boîte de vitesses automatique, son ouverture OC doit être obstruée au moyen d'un dispositif d'obturation DO selon l'invention.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule, qu'il soit terrestre, maritime (ou fluvial), ou aéronautique, et comprenant une paroi structurelle de plancher comportant une ouverture permettant le passage et les débattements d'un levier de vitesse et devant être complètement obturée.

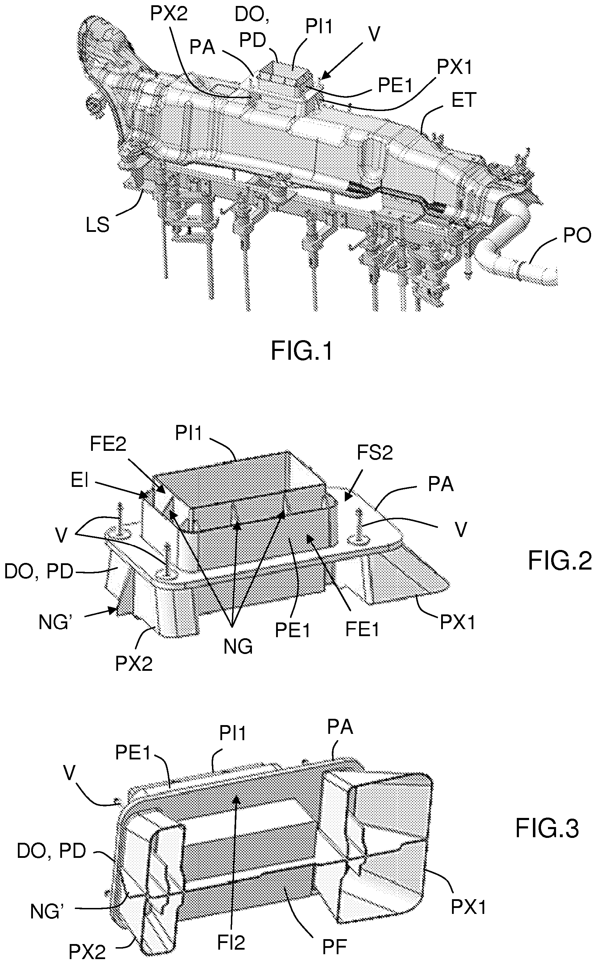

On a schématiquement représenté sur les figures 1 à 3 un exemple de réalisation non limitatif d'un dispositif d'obturation DO selon l'invention. Dans la figure 1, le dispositif d'obturation DO est placé en un endroit prédéfini de la face supérieure d'un écran thermique ET, lui-même supporté par ce que l'homme de l'art appelle une « luge » LS. Cette luge LS est destinée à permettre le transport de l'écran thermique ET (ici avec le dispositif d'obturation DO et un pot d'échappement PO) en un endroit prédéfini situé sous une face inférieure FI1 de la paroi structurelle PS, puis la translation vers le haut de cet écran thermique ET en vue de son couplage automatisé à cette paroi structurelle PS.

On notera qu'en variante le dispositif d'obturation DO pourrait être couplé à la paroi structurelle PS, éventuellement manuellement par un technicien, avant que la luge LS ne soit positionnée sous la face inférieure FI1 de la paroi structurelle PS.

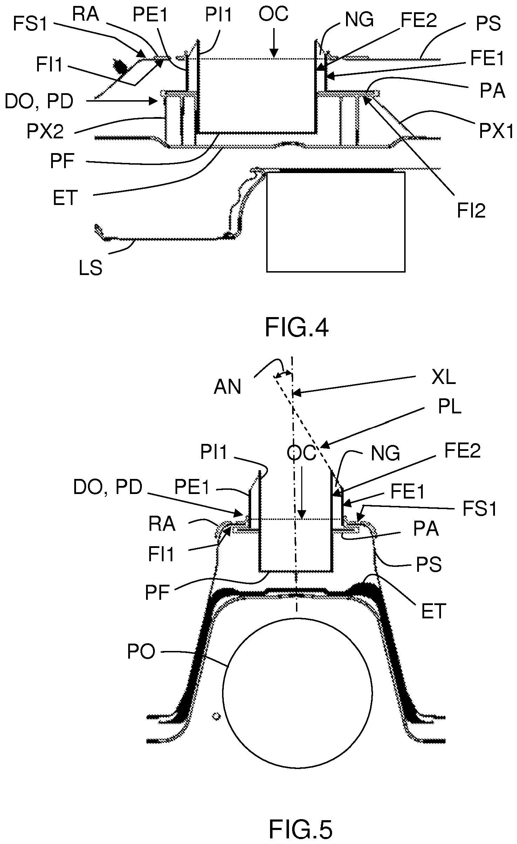

Par exemple, cette paroi structurelle PS peut être réalisée en acier ou en matériau composite. Egalement par exemple, et comme illustré non limitativement sur les figures 1 et 5, un pot d'échappement PO peut être installé sous cet écran thermique ET.

Comme illustré sur les figures 1 à 3, un dispositif d'obturation DO, selon l'invention, comprend principalement une pièce PD comportant des parois interne PI1 et externe PE1, et destinée à être introduite dans l'ouverture OC par la face inférieure FI1 de la paroi structurelle PS.

La paroi externe PE1 a une forme qui est sensiblement identique à celle de l'ouverture OC afin de la traverser après introduction de la pièce PD par la face inférieure FI1. Le mot « identique » signifie que la section de la paroi externe PE1 à la même forme que l'ouverture OC mais avec des dimensions très légèrement inférieures à celles de l'ouverture OC afin de pouvoir la traverser. Cette forme est ici sensiblement rectangulaire à coins arrondis, à titre d'exemple.

Par ailleurs, cette paroi externe PE1 définit un espace interne EI logeant la paroi interne PI1.

La paroi interne PI1 dépasse de la paroi externe PE1, et a une face externe FE2 qui est munie de nervures NG de forme adaptée au guidage de la pièce PD lors de son introduction. On entend ici par « dépasser » le fait de s'étendre au-delà de l'extrémité supérieure de la paroi externe PE1. Par ailleurs, on entend ici par « forme adaptée au guidage » le fait que cette forme induit automatiquement un guidage direct et efficace de la pièce PD lors de son introduction dans l'ouverture OC.

Par exemple, et comme illustré non limitativement sur les figures 2, 4 et 5, les nervures NG peuvent présenter une largeur qui décroît au-delà de la paroi externe PE1 en s'élevant vers l'extrémité supérieure de la paroi interne PI1. Pour ce faire, leur largeur peut décroître sensiblement linéairement de manière à définir un pan incliné PL sensiblement plan. Par exemple, l'angle d'inclinaison AN compris entre le plan incliné PL et l'axe XL des nervures, peut être compris entre environ 10° et environ 30°.

On comprendra que les nervures NG (définies entre les parois interne PI1 et externe PE1) permettent de centrer et guider la pièce PD dans l'ouverture OC sans blocage lors de son introduction dans une phase de couplage, manuelle ou automatisée au moyen d'une luge LS.

De préférence, et comme illustré non limitativement, les nervures NG peuvent être définies sur quatre côtés de la face externe FE2 de la paroi interne PI1. Cela permet en effet de centrer précisément la pièce PD par rapport à l'ouverture OC, et ainsi de faciliter encore plus son guidage pendant son introduction dans l'ouverture OC.

Egalement de préférence, et comme illustré non limitativement, les nervures NG peuvent relier entre elles les parois externe PE1 et interne PI1. Cela permet en effet de rigidifier la pièce PD, ce qui est avantageux aussi bien pendant la phase de couplage (du fait des contraintes subies) qu'après cette phase de couplage en cas d'éventuelle utilisation en tant qu'élément de rangement. On notera que les zones évidées qui ne servent pas au rangement peuvent être éventuellement remplies d'ouate (au moins partiellement) pour améliorer l'isolation acoustique.

Afin de faciliter le glissement et le guidage des nervures NG, il est avantageux, comme illustré non limitativement sur les figures 4 et 5, de prévoir un renfort arrondi RA sur la face supérieure FS1 de la paroi structurelle PS, à la périphérie de l'ouverture OC. Ce renfort arrondi RA est solidarisé fixement à la paroi structurelle PS, par exemple par soudage ou collage. L'arrondi est défini au moins au niveau de l'extrémité qui est située autour de l'ouverture OC. Par ailleurs, ce renfort arrondi RA peut être réalisé en métal afin de bien supporter les contraintes de choc. En variante, il pourrait être réalisé en matière plastique rigide.

La forme de la section de la paroi interne PI1 est ici sensiblement rectangulaire à titre d'exemple non limitatif.

Par exemple, et comme illustré non limitativement sur les figures 2 à 5, la paroi interne PI1 peut s'étendre au-delà de l'extrémité inférieure de la paroi externe PE1, et l'espace interne qu'elle délimite par sa face interne (opposée à sa face externe FE2) peut être fermé par une paroi de fond PF du côté de son extrémité inférieure, de manière à empêcher la remontée de bruits gênants dans l'habitacle et à définir un logement de rangement, par exemple dans une console centrale ou un vide-poches situé(e) entre les sièges avant du véhicule. Cette paroi de fond PF peut être sensiblement perpendiculaire à la paroi externe PE1.

On notera, comme illustré non limitativement sur les figures 2 à 5, que la pièce PD peut avantageusement comprendre une paroi d'appui PA qui entoure sa paroi externe PE1 sensiblement perpendiculairement à sa face externe FE1 et qui est propre à être plaquée contre la face inférieure FI1 de la paroi structurelle PS. Comme illustré, cette paroi d'appui PA peut également entourer la paroi interne PI1 sensiblement perpendiculairement à sa face externe FE2. Cette paroi d'appui PA permet d'augmenter encore la rigidité de la pièce PD et d'empêcher la remontée de bruits gênants dans l'habitacle.

On notera également, comme illustré non limitativement sur les figures 1 à 3, que la paroi d'appui PA peut être munie d'au moins deux vis V propres à traverser des trous correspondants définis dans la paroi structurelle PS à la périphérie de son ouverture OC. Ces vis V sont destinées à coopérer avec des écrous qui sont vissés après l'introduction de la pièce PD du côté de la face supérieure FS1 de la paroi structurelle PS, de manière à permettre une solidarisation fixe de la pièce PD par rapport à la paroi structurelle PS (et contre la face inférieure FI1 de cette dernière (PS)). Cette solidarisation permet d'améliorer l'étanchéité phonique (ou acoustique) et peut également permettre une bonne étanchéité contre l'infiltration de liquide, en particulier en cas d'interposition d'un joint d'étanchéité entre la face inférieure FI1 de la paroi structurelle PS et la paroi d'appui PA.

De préférence, et comme illustré non limitativement on utilise quatre vis V pour assurer la solidarisation précitée.

Par ailleurs, et comme illustré non limitativement sur les figures 1 à 4, la paroi d'appui PA peut comprendre une face inférieure FI2 munie d'au moins une paroi auxiliaire PXi définissant un pied qui est propre à être sensiblement plaqué, au moins partiellement, contre un équipement situé en dessous. Dans l'exemple ici décrit, cet équipement est l'écran thermique ET.

Chaque paroi auxiliaire PXi permet de bien définir la distance séparant la face inférieure FI1 de la paroi structurelle PS de l'écran thermique ET.

Dans l'exemple illustré non limitativement sur les figures 1 à 4, la paroi d'appui PA comprend deux parois auxiliaires PX1 et PX2 (i = 1 ou 2) qui définissent respectivement deux pieds de formes différentes. Mais ces pieds pourraient être sensiblement identiques. L'utilisation de deux pieds PXi permet de faciliter le positionnement et le maintien de la pièce PD sur la face supérieure de l'écran thermique ET lors de la phase de couplage automatisée au moyen de la luge LS. Elle permet également de positionner correctement la pièce PD pendant la phase de vissage.

Le couplage automatique de la pièce PD au moyen d'une luge LS permet d'éviter d'avoir à prévoir des pions de pré-maintien sur la face supérieure de la pièce PD, ce qui s'avère économique.

On notera également que l'une au moins des parois auxiliaires PXi peut comprendre sur sa face externe au moins une nervure NG' participant au maintien de la pièce PD sur la face supérieure de l'écran thermique ET au même titre que les parois auxiliaires PXi, et éventuellement destinée à augmenter sa rigidité.

On notera également que la paroi externe PE1 et/ou la paroi interne PI1 et/ou la paroi d'appui PA peu(ven)t être munie(s) d'un surmoulage propre à participer à l'isolation phonique (ou acoustique). Ce surmoulage peut, par exemple, être réalisé au moyen d'une matière de type élastomère ou d'une mousse expansive.

L'invention offre plusieurs avantages parmi lesquels :
- elle permet de faciliter l'installation du dispositif d'obturation par un technicien, grâce, notamment, à une amélioration notable de l'ergonomie,
- elle permet une automatisation au moins partielle de l'installation du dispositif d'obturation,
- elle permet de gagner de la hauteur de rangement, du fait de l'utilisation de l'espace où est habituellement installé le boîtier de commande mécanique,
- elle peut permettre d'améliorer l'isolation phonique (ou acoustique).

## Revendications

1. Dispositif d'obturation (DO) comprenant une paroi structurelle (PS) ayant une ouverture (OC), définissant une partie au moins d'un plancher d'un véhicule et comprenant des faces inférieure (FI1) et supérieure (FS1) opposées, ledit dispositif d'obturation (DO) comprenant aussi une pièce (PD), ladite pièce (PD) comportant i) une paroi externe (PE1) ayant une forme sensiblement identique à celle de ladite ouverture (OC) afin de la traverser après introduction par ladite face inférieure (FI1) et définissant un espace interne (EI), et ii) une paroi interne (PI1) logée dans ledit espace interne (EI), dépassant de ladite paroi externe (PE1), et ayant une face externe (FE2) munie de nervures (NG), lesdites nervures (NG) ayant une largeur qui décroît sensiblement linéairement au-delà de ladite paroi externe (PE1) en s'élevant vers une extrémité supérieure de ladite paroi interne (PI1), ladite pièce (PD) comprenant une paroi d'appui (PA) entourant ladite paroi externe (PE1) sensiblement perpendiculairement à une face externe (FE1) qu'elle comprend et propre à être plaquée contre ladite face inférieure (FI1) de la paroi structurelle (PS), **caractérisé en ce que** ladite largeur desdites nervures définit un plan incliné (PL) d'un angle (AN) par rapport à l'axe (XL) desdites nervures (NG), compris entre 10° et 30°, de façon à guider ladite pièce (PD) lors de ladite introduction, ladite paroi d'appui (PA) comprenant une face inférieure (FI2) munie d'au moins une paroi auxiliaire (PXi) définissant un pied propre à être sensiblement plaqué, au moins partiellement, contre un équipement situé en dessous (ET).

2. Dispositif selon la revendication 1, **caractérisé en ce que** ladite paroi d'appui (PA) comprend deux parois auxiliaires (PXi) définissant deux pieds de formes différentes.

3. Dispositif selon l'une des revendications précédentes, **caractérisé en ce que** ladite paroi d'appui (PA) est munie d'au moins deux vis (V) propres à traverser des trous correspondants définis dans ladite paroi structurelle (PS) à la périphérie de ladite ouverture (OC), et à coopérer avec des écrous vissés après ladite introduction de la pièce (PD) du côté de ladite face supérieure (FS1) de la paroi structurelle (PS).

4. Dispositif selon l'une des revendications précédentes, **caractérisé en ce que** lesdites nervures (NG) relient entre elles lesdites paroi externe (PE1) et paroi interne (PI1).

5. Dispositif selon l'une des revendications précédentes, **caractérisé en ce que** lesdites nervures (NG) sont définies sur quatre côtés de ladite face externe (FE2) de la paroi interne (PI1).

6. Véhicule comprenant une paroi structurelle (PS) définissant une partie au moins d'un plancher et comportant une ouverture (OC), **caractérisé en ce qu'**il comprend en outre un dispositif d'obturation (DO) selon l'une des revendications précédentes, obturant ladite ouverture (OC).

7. Véhicule selon la revendication 8, **caractérisé en ce qu'**il est de type automobile.

## Patentansprüche

1. Dichtungsvorrichtung (DO) mit einer Strukturwand (PS) mit einer Öffnung (OC), die mindestens einen Teil eines Fahrzeugbodens definiert und gegenüberliegende untere (FI1) und obere (FS1) Flächen umfasst; wobei die Verschlussvorrichtung (DO) auch einen Teil (PD) umfasst, wobei der Teil (PD) i) eine Außenwand (PE1) mit einer Form umfasst, die im wesentlichen mit der der Öffnung (OC) identisch ist, um sie nach dem Einführen durch diese zu passieren Unterseite (FI1) und Definieren eines Innenraums (EI) und ii) einer Innenwand (PI1), die in dem Innenraum (EI) untergebracht ist, aus der Außenwand (PE1) herausragt und eine Außenfläche (FE2) aufweist Rippen (NG), wobei die Rippen (NG) eine Breite aufweisen, die über die Außenwand (PE1) hinaus, die zu einem oberen Ende der Innenwand (PI1) hin ansteigt, wesentlich linear abnimmt, wobei das Stück (PD) umfasst eine tragende Wand (PA), die die Außenwand (PE1) im wesentlichen senkrecht umgibt Dehnen zu einer Außenfläche (FE1), die es umfasst und zum Drücken gegen die Unterseite (FI1) der Strukturwand (PS) geeignet ist, **gekennzeichnet dadurch, dass** die Breite der Rippen eine schiefe Ebene (PL) von a definiert Winkel (AN) in Bezug auf die Achse (XL) der Rippen (NG) zwischen 10 ° und 30 °, um den Teil (PD) während des Einführens zu führen, wobei die Lagerwand (PA) umfasst eine Unterseite (FI2), die mit mindestens einer Hilfswand (PXi) versehen ist, die einen Fuß definiert, der zumindest teilweise wesentlich gegen ein darunter befindliches Gerät (ET) gedrückt werden kann.

2. Vorrichtung nach Anspruch 1, **dadurch gekennzeichnet, dass** die Stützwand (PA) zwei Hilfswände (PXi) umfasst, die zwei Füße unterschiedlicher Form definieren.

3. Vorrichtung nach einem der vorhergehenden Ansprüche, **dadurch gekennzeichnet, dass** die Stützwand (PA) mit mindestens zwei Schrauben (V) versehen ist, die zum Durchführen entsprechender Löcher geeignet sind, die in der Strukturwand (PS) an der definiert sind Umfang der Öffnung (OC) und Zusammenwirken mit Schraubmuttern nach dem Einführen des Teils (PD) an der Seite der Oberseite (FS1) der Strukturwand (PS).

4. Vorrichtung nach einem der vorhergehenden Ansprüche, **dadurch gekennzeichnet, dass** die Rippen (NG) die Außenwand (PE1) und die Innenwand (PI1) miteinander verbinden.

5. Vorrichtung nach einem der vorhergehenden Ansprüche, **dadurch gekennzeichnet, dass** die Rippen (NG) an vier Seiten der Außenseite (FE2) der Innenwand (PI1) definiert sind..

6. Fahrzeug mit einer Strukturwand (PS), die mindestens einen Teil eines Bodens definiert, und einer Öffnung (OC), die **dadurch gekennzeichnet ist, dass** sie ferner eine Dichtungsvorrichtung (DO) gemäß einem der Ansprüche umfasst vorherige, die besagte Öffnung (OC) verschließend.

7. Fahrzeug nach Anspruch 8, **dadurch gekennzeichnet, dass** es sich um einen Kraftfahrzeugtyp handelt.

## Claims

1. Sealing device (DO) comprising a structural wall (PS) having an opening (OC) defining at least part of a floor of a vehicle and comprising opposite lower (FI1) and upper (FS1) faces, said closure device (DO) also comprising part (PD), said part (PD) comprising i) an outer wall (PE1) having a shape substantially identical to that of said opening (OC) in order to pass through it after introduction by said lower face (FI1) and defining an internal space (EI), and ii) an internal wall (PI1) housed in said internal space (EI), projecting from said external wall (PE1), and having an external face (FE2) provided ribs (NG), said ribs (NG) having a width which decreases substantially linearly beyond said outer wall (PE1) rising towards an upper end of said inner wall (PI1), said piece (PD) comprising a bearing wall (PA) surrounding said outer wall (PE1) substantially perpendicular stretching to an external face (FE1) which it comprises and suitable for being pressed against said lower face (FI1) of the structural wall (PS), **characterized in that** said width of said ribs defines an inclined plane (PL) of an angle (AN) with respect to the axis (XL) of said ribs (NG), between 10 ° and 30 °, so as to guide said part (PD) during said introduction, said bearing wall (PA) comprising a lower face (FI2) provided with at least one auxiliary wall (PXi) defining a foot capable of being substantially pressed, at least partially, against an item of equipment located below (ET).

2. Device according to claim 1, **characterized in that** said support wall (PA) comprises two auxiliary walls (PXi) defining two feet of different shapes.

3. Device according to one of the preceding claims, **characterized in that** said support wall (PA) is provided with at least two screws (V) suitable for passing through corresponding holes defined in said structural wall (PS) at the periphery of said opening (OC), and to cooperate with screwed nuts after said introduction of the part (PD) on the side of said upper face (FS1) of the structural wall (PS).

4. Device according to one of the preceding claims, **characterized in that** said ribs (NG) interconnect said outer wall (PE1) and inner wall (PI1).

5. Device according to one of the preceding claims, **characterized in that** said ribs (NG) are defined on four sides of said outer face (FE2) of the inner wall (PI1).

6. Vehicle comprising a structural wall (PS) defining at least part of a floor and comprising an opening (OC), **characterized in that** it further comprises a sealing device (DO) according to one of claims previous ones, closing off said opening (OC).

7. Vehicle according to claim 8, **characterized in that** it is of the automotive type.
